# EUROPÄISCHE PATENTANMELDUNG

(11) **EP 2 778 811 A1**
(43) Veröffentlichungstag der Anmeldung: **17.09.2014**
(21) Anmeldenummer: 13159362.6
(22) Anmeldetag: 15.03.2013
(51) Int. Cl.: G05B 19/042

(54) **Vorrichtung für ein AS-Interface System**

(71) Anmelder: Siemens Aktiengesellschaft, 80333 München (DE)
(72) Erfinder: Macher, Andreas, 92318 Neumarkt (DE); Schumann, Gordon, 91052 Erlangen (DE)

(57) **Zusammenfassung**

Die Erfindung betrifft eine Vorrichtung für ein AS-Interface System sowie ein Verfahren zum Abschalten der Energieversorgung des AS-Interface Systems mit der Vorrichtung. Um ein Automatisierungssystem mit einem verbesserten Energiemanagement bereitzustellen wird vorgeschlagen, dass die Vorrichtung einen ersten Ausgang (17), an welchen ein erstes AS-Interface Kabel (7) anzuschließen ist, einen zweiten Ausgang (16), an welchen ein zweites AS-Interface Kabel (6) anzuschließen ist, ein Kommunikationsmittel (13) zum Empfangen von PROFINET Telegrammen und einen Eingang (14), an welchen eine externe Energieversorgungsquelle anzuschließen ist, umfasst, wobei die Vorrichtung am ersten Ausgang (17) und am zweiten Ausgang (16) jeweils eine Spannung zur Energieversorgung des AS-Interface Systems anlegen kann, wobei die Vorrichtung ein Abschaltmittel (8) zum Unterbrechen einer über den ersten und zweiten Ausgang (17,16) erfolgenden Energieversorgung umfasst und bei einem Empfang eines PROFIenergy Kommandos über das Kommunikationsmittel (13) mittels des Abschaltmittels (8) eine über den ersten und zweiten Ausgang (17,16) erfolgende Energieversorgung unterbricht.

## Beschreibung

Die Erfindung betrifft eine Vorrichtung für ein AS-Interface System sowie ein Verfahren zum Abschalten der Energieversorgung des AS-Interface Systems mit der Vorrichtung.

Das AS-Interface wird üblicherweise innerhalb der industriellen Automatisierungstechnik eingesetzt. Das AS-Interface (abgekürzt AS-i für engl. Actuator-Sensor-Interface; deutsch Aktor-Sensor-Schnittstelle) ist ein Standard für die Feldbus-Kommunikation, der zum Anschluss von Aktoren und Sensoren entwickelt worden ist. Innerhalb eines AS-i Systems sind üblicherweise AS-i Slaves mit einem AS-i Master verbunden. Feldgerätebaugruppen, welche mit einem AS-i Slave verbunden sind oder selbst als AS-i Slave ausgebildet sind, können über den AS-i Master angesteuert und/oder ausgelesen werden. Die Kommunikation zwischen dem AS-i Master und den AS-i Slaves erfolgt üblicherweise über ein gelbes AS-i Flachbandkabel. Über dieses AS-i Flachbandkabel erfolgt neben der Kommunikation ferner eine Energieversorgung der AS-i Slaves. Zusätzlich zu dem zur Kommunikation genutzten Flachbandkabel können AS-i Slaves über ein zusätzliches Kabel mit Energie versorgt werden. Üblicherweise wird hier eine schwarzes Flachbandkabel verwendet. Ein AS-i Slave kann somit über zwei AS-i Flachbandkabel mit Energie versorgt werden.

Mittels eines AS-i Systems können eine Vielzahl von Feldgerätebaugruppen, wie Messfühler (Sensoren), Stellglieder und Antriebe (Aktoren), aber auch Motorstarter und Frequenzumrichter mit einem übergeordneten Steuergerät verbunden werden. Hierfür ist der AS-i Master mit dem übergeordneten Steuergerät kommunikativ verbunden. Ein übergeordnetes Steuergerät ist beispielsweise eine speicherprogrammierbare Steuerung (kurz SPS). Die Kommunikation zwischen der SPS und dem AS-i Master kann beispielsweise mittels PROFINET erfolgen. PROFINET (Process Field Network) ist ein offener Industrial Ethernet Standard von PROFIBUS & PROFINET International für die Automatisierung. PROFINET nutzt TCP/IP und IT-Standards, ist Echtzeit-Ethernet-fähig und ermöglicht die Integration von Feldbus-Systemen.

Ein PROFINET System umfasst insbesondere einen IO-Controller (PROFINET Steuerung) und mindestens ein IO-Device (PROFINET Feldgerät). Die PROFINET Steuerung ist eine Steuerung, die die Automatisierungsaufgaben innerhalb des PROFINET Systems kontrolliert. Das PROFINET Feldgerät ist ein Feldgerät, das von einem IO-Controller kontrolliert und gesteuert wird. Ein PROFINET Feldgerät kann aus mehreren Modulen und Submodulen bestehen.

Mittels eines PROFINET Systems lassen sich Automatisierungsanlagen insbesondere im industriellen Umfeld realisieren (z.B. Produktionsanlagen, Fertigungslinie, Fabrikautomation, Prozessautomation). Mittels der PROFINET Steuerung können derartige Systeme zentral gesteuert und kontrolliert werden.

PROFIenergy ist ein Profil zur Unterstützung von Energiemanagement Aufgaben in PROFINET Automatisierungsanlagen. PROFIenergy setzt auf dem Kommunikationsprotokoll PROFINET auf und nutzt PROFINET Telegramme zur Übertragung von PROFIenergy Kommandos. Mittels der PROFIenergy Kommandos kann der Energieverbrauch von Automatisierungsgeräten einer Automatisierungsanlage in der Fertigung (wie z.B. Roboter-Montagezellen, Laserschneideanlagen und Teilsystemen wie Lackieranlagen) innerhalb des PROFINET Netzwerks gesteuert werden. Die Steuerung des Energieverbrauchs selbst erfolgt über offene und standardisierte PROFIenergy Kommandos, die auf geplante und ungeplante Unterbrechungen in der Fertigung angewandt werden. PROFIenergy Kommandos sind in PROFINET Telegrammen eingebettet und werden innerhalb des PROFINET Systems mittels der PROFINET Telegramme seitens der PROFINET Steuerung an PROFINET Feldgeräte verschickt.

Durch das Versenden von PROFIenergy Kommandos mittels der PROFINET Steuerung können die Energieverbraucher einer Automatisierungsanlage auf Produktionspausen reagieren. Pausen können zu bekannten Zeiten gestartet werden oder als Reaktion auf nicht vorhersehbare Ereignisse bzw. Zusammenbrüche entstehen. Jeder Verbraucher reagiert auf die PROFIenergy Kommandos in einer für ihn geeigneten Weise. Die spezifizierten PROFIenergy Kommandos basieren insbesondere auf folgende Anwendungsfälle:
- Kurze Pausen (bis zu einer Stunde): Im Allgemeinen sind solche Pausen geplant, bei welchen die PROFINET Feldgeräte routinemäßig abgeschaltet werden können, z.B. Mittagspausen. Sicherheitsbezogene Funktionen werden entsprechend den Sicherheitsvorschriften behandelt. Beim erneuten Einschalten, startet das PROFINET System PROFINET Feldgeräte in einer Einschaltreihenfolge ein und überprüft, dass alle PROFINET Feldgeräte korrekt laufen, so dass z.B. der Fertigungsprozess wieder aufgenommen werden kann.
- Längere Pausen (mehrere Stunden oder Tage): Hier verhält es sich ähnlich wie bei den kurzen Pausen, nur dass hier zusätzliche PROFINET Feldgeräte in den Stand-By Modus geführt oder komplett ausgeschaltet werden, bzw. tiefere 'Sleep' Modi angesteuert werden.
- Ungeplante Pausen (normalerweise Störungen): Hier verhält es sich ebenso ähnlich wie bei den kurzen Pausen. Der Benutzer weiß nur nicht, wann und wie lange die Pause passieren wird. Zuerst werden die PROFINET Feldgeräte in einen 'Stop'-Zustand gefahren, um den Energieverbrauch zu reduzieren. Je nach Dauer werden die PROFINET Feldgeräte falls sinnvoll in weitere energiesparende Zustände geschaltet.
- Messen und Visualisieren der Belastung: Daten der PROFINET Feldgeräte werden gesammelt, entweder direkt (durch Instrumente) oder implizit (durch Kenntnis der elektrischen Parameter).

Das PROFIenergy Profil beschränkt sich allerdings auf den Einsatz mit dem Kommunikationsstandard PROFINET und ist somit nur bei PROFINET Feldgeräten direkt anwendbar.

Es ist Aufgabe der vorliegenden Erfindung ein Automatisierungssystem mit einem verbesserten Energiemanagement bereitzustellen.

Diese Aufgabe wird gelöst durch eine Vorrichtung gemäß Anspruch 1, d.h. durch eine Vorrichtung für ein AS-Interface System mit einem ersten Ausgang, an welchen ein erstes AS-Interface Kabel anzuschließen ist, einem zweiten Ausgang, an welchen ein zweites AS-Interface Kabel anzuschließen ist, einem Kommunikationsmittel zum Empfangen von PROFINET Telegrammen und einem Eingang, an welchen eine externe Energieversorgungsquelle anzuschließen ist, wobei die Vorrichtung am ersten Ausgang und am zweiten Ausgang jeweils eine Spannung zur Energieversorgung des AS-Interface Systems anlegen kann, wobei die Vorrichtung ein Abschaltmittel zum Unterbrechen einer über den ersten und zweiten Ausgang erfolgenden Energieversorgung umfasst und bei einem Empfang eines PROFIenergy Kommandos über das Kommunikationsmittel mittels des Abschaltmittels eine über den ersten und zweiten Ausgang erfolgende Energieversorgung unterbricht, sowie durch ein Verfahren gemäß Anspruch 8, d.h. durch ein Verfahren zum Abschalten der Energieversorgung eines AS-i Systems mit einer Vorrichtung nach einem der Ansprüche 1 bis 7, wobei die Vorrichtung ein PROFIenergy Kommando über das Kommunikationsmittel empfängt und daraufhin mittels des Abschaltmittels eine über den ersten und zweiten Ausgang erfolgende Energieversorgung unterbricht.

Vorteilhafte Weiterbildungen der Erfindung sind in den abhängigen Ansprüchen 2 bis 7 angegeben.

Die Vorrichtung dient der Energieversorgung des AS-Interface Systems. Über den Eingang kann eine externe Energieversorgungsquelle, z.B. ein Netzteil, mit der Vorrichtung verbunden werden, so dass die Vorrichtung mittels der über den Eingang bezogenen Energie am ersten und zweiten Ausgang eine Spannung zur Energieversorgung des AS-i Systems anlegen kann.

Die durch die Vorrichtung bereitgestellte Spannung am ersten Ausgang kann unterschiedlich zur bereitgestellten Spannung am zweiten Ausgang sein. Zur Energieversorgung des AS-i Systems wird am ersten Ausgang das erste AS-Interface Kabel angeschlossen, welches insbesondere ein AS-i Flachbandkabel (üblicherweise ein schwarzes AS-i Flachbandkabel) ist, und am zweiten Ausgang das zweite AS-Interface Kabel angeschlossen, welches insbesondere ein AS-i Flachbandkabel (üblicherweise ein AS-i gelbes Flachbandkabel) ist.

Innerhalb des AS-i Systems sind AS-i Slaves mit dem ersten und zweiten AS-Interfacekabel verbunden und beziehen hierüber ihre Energie. Über das zweite AS-Interfacekabel erfolgt ferner die Kommunikation zwischen den AS-i Slaves und einem AS-i Master, welcher vorzugsweise durch die Vorrichtung ausgebildet ist. Hierfür sind die AS-i Slaves mit dem zweiten AS-i Flachbandkabel, welches mit dem zweiten Ausgang verbunden ist, verbunden.

Empfängt die Vorrichtung über das Kommunikationsmittel ein PROFINET Telegramm, welches ein PROFIenergy Kommando umfasst, welches ein Abschalten der Energieversorgung des AS-i System charakterisiert, so unterbricht die Vorrichtung mittels ihres Abschaltmittels die über den ersten und zweiten Ausgang erfolgende Energieversorgung des AS-i Systems. Hierbei wird insbesondere die durch die Vorrichtung am ersten und zweiten Ausgang bereitgestellte Versorgungsspannung abgeschaltet. Bei dem Unterbrechen der Energieversorgung über den ersten und zweiten Ausgang wird insbesondere das am ersten Ausgang angeschlossene AS-i Kabel (Hilfsversorgungsleitung) und das am zweiten Ausgang angeschlossene AS-i Kabel (AS-i Kommunikationsstrang) spannungslos geschaltet.

Das Abschaltmittel ist vorzugsweise ein elektrisches oder mechanisches Schaltelement, welches die ersten und zweiten Ausgänge vom Eingang derart trennt, dass bei Anliegen einer Versorgungsspannung am Eingang an den ersten und zweiten Ausgängen keine Spannung anliegt.

In einer vorteilhaften Ausführungsform der Erfindung umfasst die Vorrichtung einen AS-Interface Master, welcher über den zweiten Ausgang mit nachgeschalteten AS-Interface Slaves kommunizieren kann. Über den zweiten Ausgang erfolgt zum einen die Energieversorgung nachgeschalteter AS-i Slaves sowie die Kommunikation mit den nachgeschalteten AS-i Slaves. Über den ersten Ausgang erfolgt lediglich eine Energieversorgung nachgeschalteter AS-i Slaves.

In einer weiteren vorteilhaften Ausführungsform der Erfindung umfasst die Vorrichtung ein Datenentkopplungsmodul, welches geräteintern zwischen dem Abschaltmittel und dem zweiten Ausgang geschaltet ist.

Das Datenentkopplungsmodul stellt die Trennung von Daten und Energie durch eine integrierte Datenentkopplung sicher und macht damit Daten- und Energieübertragung auf einer Leitung möglich. Es kann somit über eine am zweiten Ausgang angeschlossene AS-i Kabel sowohl eine Energieübertragung als auch eine Datenübertragung erfolgen.

Das Datenentkopplungsmodul weist vorzugsweise zwei Induktivitäten und zwei dazu parallel geschalteten Widerständen auf. Durch das Datenentkopplungsmodul wird verhindert, dass die Datenübertragung durch die Spannungsversorgung kurzgeschlossen wird. Gleichzeitig wandelt es die Strompulse, die von dem AS-Interface Sender (dem AS-i Master) erzeugt werden, in Spannungspulse um, die von den AS-Interface Empfängern (z.B. den AS-i Slaves) detektiert werden können.

Das AS-Interface Datenentkopplungsmodul ist vorzugsweise für AS-Interface Netze mit ca. 30 V Versorgung oder ca. 24 V Versorgung ausgelegt.

Am Eingang ist vorzugsweise eine DC 30 Volt Netzteil anzuschließen.

Am ersten Ausgang wird vorzugsweise durch die Vorrichtung eine Spannung von ca. 24 Volt angelegt. Am zweiten Ausgang wird vorzugsweise durch die Vorrichtung eine Spannung von ca. 30 Volt angelegt.

In einer weiteren vorteilhaften Ausführungsform der Erfindung ist der AS-i Master mit dem Abschaltmittel derart verbunden, dass er die vorliegende Schaltstellung des Abschaltmittels erfassen kann.

Der AS-i Master kann über die vorliegende Schaltstellung des Abschaltmittels erkennen, ob ein Abschalten der Energieversorgung aufgrund eines PROFIenergy Kommandos erfolgte oder nicht.

Bei einem Abschalten der Versorgungsspannung für den ersten und zweiten Ausgang mittels des Abschaltmittels würde der ASi Master üblicherweise das Fehlen der Versorgungsspannung für den zweiten Ausgang, über welchen ferner die Kommunikation erfolgt, detektieren. Hierauf würde der AS-i Master üblicherweise eine Diagnosemeldung an die mit der Vorrichtung verbundene übergeordnete Steuerung (z.B. SPS) senden. Die übergeordnete Steuerung würde anhand der Diagnosemeldung einen Fehler im AS-i System erkennen und entsprechend reagieren.

Erkennt der AS-i Master, dass die Versorgungsspannung für den ersten und zweiten Ausgang abgeschaltet wurde, so wird lediglich eine Diagnosemeldung an die mit der Vorrichtung verbundene übergeordnete Steuerung gesendet, wenn die vom AS-i Master erfasste Schaltstellung des Abschaltmittels auf kein Vorliegen eines PROFIenergy Kommandos schließen lässt. Bei einem PROFIenergy Kommando sind vorzugsweise beide Schaltelemente des Abschaltmittels geöffnet. Sind somit die Schaltelemente des Abschaltmittels aufgrund eines PROFIenergy Kommandos geöffnet und der AS-i Master erfasst diese Schaltstellung, so wird die üblicherweise zu versendende Diagnosemeldung an die mit der Vorrichtung verbundene übergeordnete Steuerung durch den AS-i Master unterbunden, d.h. es wird keine Diagnosemeldung hinsichtlich des Fehlens der Energieversorgung am zweiten Ausgang ausgegeben. Die Schaltstellung des Abschaltmittels kann dem AS-i Master beispielsweise über den Rückwandbus mitgeteilt werden. Es ist ebenso denkbar, dass mittels einer separaten Verbindung zwischen dem Abschaltmittel und dem AS-i Master der AS-i Master die Schaltstellung des Abschaltmittels erfassen kann.

In einer weiteren vorteilhaften Ausführungsform der Erfindung ist die Vorrichtung derart ausgebildet, dass dem AS-Interface Master ein über das Kommunikationsmittel empfangenes PROFIenergy Kommando angezeigt wird. Es wird z.B. das empfangen PROFIenergy Kommando an den AS-i Master weitergeleitet. Dadurch, dass dem AS-i Master das PROFIenergy Kommando angezeigt wird, wird sofern am ersten Ausgang ein Fehlen der Versorgungsspannung durch den AS-i Master detektiert wird und ein PROFIenergy Kommando vorliegt die üblicherweise zu versendende Diagnosemeldung an die mit der Vorrichtung verbundene übergeordnete Steuerung durch den AS-i Master unterbunden, d.h. es wird keine Diagnosemeldung hinsichtlich des Fehlens der Energieversorgung am zweiten Ausgang ausgegeben.

In einer weiteren vorteilhaften Ausführungsform der Erfindung umfasst die Vorrichtung eine erste Auswerteeinheit, welche die Strom- und/oder Spannungswerte am ersten und zweiten Ausgang erfasst, wobei die Vorrichtung derart ausgestaltet ist, dass sie über das Kommunikationsmittel die mittels der ersten Auswerteeinheit erfassten Strom- und/oder Spannungswerte ausgibt. Die mittels der ersten Auswerteeinheit ermittelten Strom- und/oder Spanungswerte werden über das Kommunikationsmittel mittels eines PROFINET Telegramms, vorzugsweise mittels eines PROFIenergy Kommandos, an eine übergeordnete Steuerung ausgegeben. Hierbei müssen nicht alle erfassten Strom- und/oder Spannungswerte ausgegeben werden, sondern es kann ebenso lediglich eine Auswahl der erfassten Strom- und/oder Spannungswerte oder eine hieraus gebildeter Wert an die übergeordnete Steuerung ausgegeben werden. Die übergeordnete Steuerung ist vorzugsweise die PROFINET Steuerung. Dadurch, dass der übergeordneten Steuerung die mit der ersten Auswerteeinheit erfassten Verbrauchsdaten übermittelt werden, kann diese den Energieverbrauch des AS-i Systems erfassen und auswerten. Hierdurch kann ein verbessertes Energiemanagement innerhalb des Automatisierungssystems erfolgen. Die PROFINET Steuerung kann folglich neben dem Energieverbauch des PROFINET Systems ebenso den Energieverbauch des AS-i Systems betrachten.

In einer weiteren vorteilhaften Ausführungsform der Erfindung ist die Vorrichtung durch eine Geräteeinheit ausgebildet. Einem Endanwender wird somit durch lediglich eine Geräteeinheit sowohl ein AS-i Master, ein AS-i Power-Modul sowie ein Gateway zum übergeordneten PROFINET System bereitgestellt. Der ansonsten erforderliche Verdrahtungsaufwand zwischen den üblicherweise notwendigen Geräten wird hierdurch minimiert.

In einer weiteren vorteilhaften Ausführungsform der Erfindung ist die Vorrichtung modular aufgebaut und umfasst ein PROFINET-Kopfmodul, ein Power-Modul und ein Master-Modul, wobei das PROFINET-Kopfmodul das Kommunikationsmittel aufweist, das Power-Modul den Eingang und das Abschaltmittel aufweist und das Master-Modul den ersten und zweiten Ausgang aufweist. Das Master-Modul bildet den AS-Interface Master für das AS-i System. Die einzelnen separaten Module sind miteinander mechanisch und elektrisch verbindbar. Dies erfolgt vorzugsweise mittels eines Modulträgers. Der Modulträger ist derart ausgebildet, dass die einzelnen Module über lediglich eine Seitenfläche des Modulträgers eine mechanische Verbindung zum Modulträger herstellen. Diese mechanische Verbindung ist vorzugsweise eine lösbare Schnappverbindung. Durch das mechanische Verbinden der einzelnen Module mit dem Modulträger stellen die einzelnen Module über den Modulträger ferne eine elektrische Verbindung zu den vorgesehenen Modulen her. Die Kommunikation der Module untereinander erfolgt vorzugsweise über einen Rückwandbus des Modulträgers.

Das Power-Modul umfasst vorzugsweise ferner das Datenentkopplungsmodul. Das Power-Modul umfasst vorzugsweise ferner die erste Auswerteeinheit.

In einer weiteren vorteilhaften Ausführungsform der Erfindung erfolgt ein Unterbrechen einer über den ersten und zweiten Ausgang erfolgenden Energieversorgung, wenn die Vorrichtung mittels ihres Kommunikationsmittels ein PROFIenergy Kommando empfängt, welches gemäß PROFIenergy eine kurze Pause, eine längere Pause und/oder eine ungeplante Pause charakterisiert.

Innerhalb des PROFINET Systems wird das PROFIenergy Kommando mittels eines PROFINET Telegramms verschickt.

Das PROFIenergy Kommando dient insbesondere dem Abschalten einer Anlage während eines Pausenbetriebs.

In einer weiteren vorteilhaften Ausführungsform der Erfindung erfolgt durch das Abschaltmittel ein Wiederherstellen einer über den ersten und zweiten Ausgang erfolgenden Energieversorgung, wenn die Vorrichtung mittels ihres Kommunikationsmittels ein PROFIenergy Kommando empfängt, welches gemäß PROFIenergy ein Wiedereinschalten des abgeschalteten Systems charakterisiert. Hierfür werden vorzugsweise die beim Unterbrechen geöffneten zuständigen Schaltkontakte des Abschaltmittels geschlossen.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Vorrichtung, welche mit einer PROFINET Steuerung, zwei AS-i Slaves und einem Netzteil verbunden ist, und
- FIG 2: eine schematische Darstellung der Vorrichtung aus FIG 1, welche als eine Geräteeinheit ausgebildet ist.

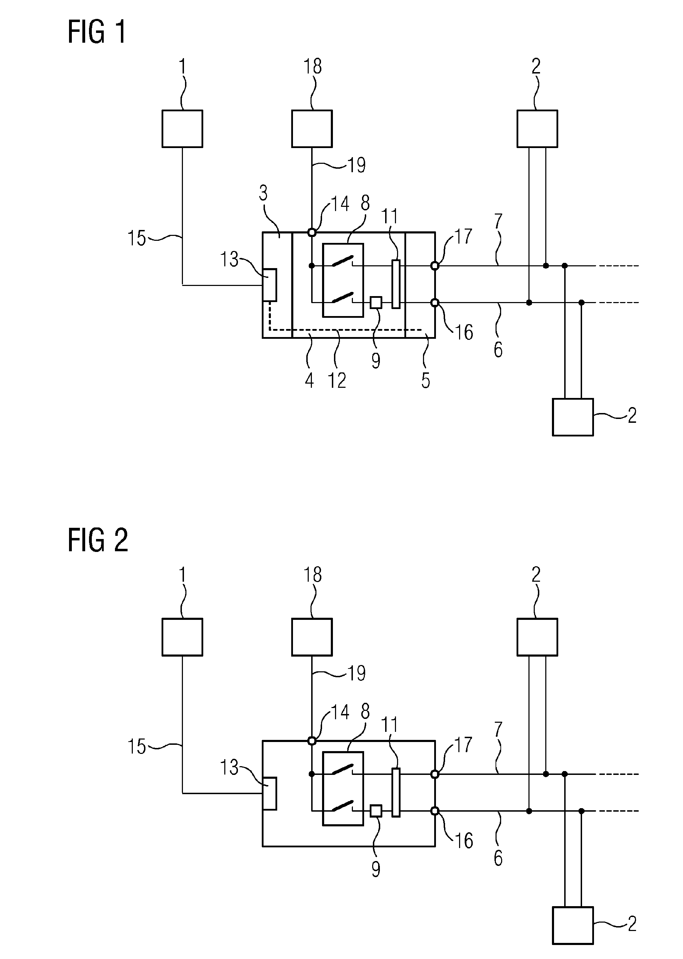

FIG 1 zeigt eine schematische Darstellung einer Vorrichtung, welche mit einer PROFINET Steuerung 1, zwei AS-i Slaves 2 und einem Netzteil 18 verbunden ist. Die Vorrichtung ist eine Vorrichtung eines AS-Interface Systems und umfasst einen ersten Ausgang 17, an welchen ein erstes AS-Interface Flachbandkabel 7 angeschlossen ist, einen zweiten Ausgang 16, an welchen ein zweites AS-Interface Flachbandkabel 6 angeschlossen ist, ein Kommunikationsmittel 13 zum Empfangen von PROFINET Telegrammen und einen Eingang 14, an welchen das Netzteil 18 über eine Leitung 19 als externe Energieversorgungsquelle angeschlossen ist. Die PROFINET Steuerung 1, welche ein PROFINET Controller ist, ist mittels eines PROFINET-Kabels 15 mit dem Kommunikationsmittel 13 der Vorrichtung verbunden und kann hierüber mit der Vorrichtung kommunizieren.

Die Vorrichtung kann mittels der über den Eingang 14 bezogenen Energie des Netzteils 18 am ersten Ausgang 17 und am zweiten Ausgang 16 jeweils eine Spannung zur Energieversorgung des AS-Interface Systems, insbesondere der nachgeschalteten AS-i Slaves 2, anlegen.

Die Vorrichtung ist modular aufgebaut und umfasst ein PROFINET-Kopfmodul 3, ein Power-Modul 4 und ein Master-Modul 5. Das Master-Modul 5 bildet den AS-i Master für das AS-i System. Das PROFINET-Kopfmodul 3 umfasst das Kommunikationsmittel 13. Das Power-Modul 4 den Eingang 14, ein Abschaltmittel 8, ein Datenentkopplungsmodul 9 und eine erste Auswerteeinheit 11. Das Master-Modul 5 umfasst den ersten und zweiten Ausgang 17,16.

Die einzelnen Module 3,4,5 sind mechanisch und elektrisch mit einem Modulträger verbunden. Der Modulträger ist derart ausgebildet, dass die einzelnen Module 3,4,5 über lediglich eine Seitenfläche des Modulträgers eine mechanische Verbindung zum Modulträger herstellen. Durch das mechanische Verbinden der einzelnen Module 3,4,5 mit dem Modulträger erfolgt ferne über den Modulträger eine elektrische Verbindung der Module 3,4,5 untereinander. Die Kommunikation der Module 3,4,5 untereinander erfolgt über einen Rückwandbus 12 des Modulträgers. Über das Power-Modul 4 werden die einzelnen Module 3,5 mit Energie versorgt. Die hierfür erforderliche elektrische Verbindung erfolgt über den Modulträger.

Im Betrieb des AS-i Systems werden die einzelnen AS-i Slaves 2 von der Vorrichtung mit Energie versorgt. Hierfür bezieht die Vorrichtung über den Eingang 14 von dem Netzteil 18 Energie und legt am ersten Ausgang 17 eine erste Spannung, insbesondere 24 Volt, und am zweiten Ausgang 16 eine zweite Spannung, insbesondere 30 Volt, an. Die AS-i Slaves 2, welche mittels der beiden AS-i Flachbandkabel 6,7 mit der Vorrichtung verbunden sind, beziehen hierüber ihrer zum Betrieb erforderliche Energie. Über das am ersten Ausgang 17 angeschlossene erste AS-i Flachbandkabel 7 erfolgt lediglich die Energieversorgung der AS-i Slaves 2. Der zweite Ausgang 16 dient neben der Energieversorgung der AS-i Slaves 2 ferner der Kommunikation mit den AS-i Slaves 2. Das Master-Modul 5 sendet über den zweiten Ausgang 16 und somit über das zweite AS-i Flachbandkabel 6 AS-i Telegramme an die einzelnen AS-i Slaves 2. Die AS-i Slaves 2 können über das zweite AS-i Flachbandkabel 6 ebenso AS-i Telegramme an das Master-Modul 5 senden.

Da über den zweiten Ausgang 16 sowohl eine Energieversorgung als auch eine Kommunikation mit den angebundene AS-i Slaves 2 erfolgt ist dem zweiten Ausgang 16 geräteintern ein Datenentkopplungsmodul 9 vorgeschaltet. Dieses Datenentkopplungsmodul 9 stellt die Trennung von Daten und Energie durch eine integrierte Datenentkopplung sicher und macht damit Daten- und Energieübertragung auf einer Leitung möglich. Das Datenentkopplungsmodul weist hierzu zwei Induktivitäten von je ca. 50 µH und zwei dazu parallel geschalteten Widerständen von je ca. 39 Ω auf.

Im aktiven Betrieb des AS-i Systems werden die mit der Vorrichtung verbundenen Slaves 2 über die Vorrichtung mit Energie versorgt.

Die PROFINET Steuerung 1 kann über PROFINET Telegramme mit der Vorrichtung kommunizieren. Hierbei kann die PROFINET Steuerung 1 zur Energieeinsparung ein PROFIenergy Kommando an die Vorrichtung senden. Ist beispielsweise abzusehen, dass das AS-i System in den nächsten Stunden keinen aktiven Betrieb aufweisen muss, so kann die PROFINET Steuerung 1 ein PROFIenergy Kommando an die Vorrichtung senden, welche ein Abschalten des AS-i Systems charakterisiert.

Sobald die Vorrichtung ein PROFIenergy Kommando von der PROFINET Steuerung 1 über das Kommunikationsmittel 13 empfängt, welches ein Abschalten des AS-i Systems charakterisiert, unterbricht die Vorrichtung die über den ersten und zweiten Ausgang 17,16 erfolgende Energieversorgung mittels des Abschaltmittels 8. Hierbei werden die ersten und zweiten Ausgänge 17,16 von der über den Eingang 14 erfolgenden Energieversorgung derart getrennt, dass keine Energieversorgung des AS-i Systems über die Ausgänge 16,17 erfolgt. Die Ausgänge 16,17 werden spannungslos geschaltet. Das Abschaltmittel 8 umfasst hierfür zwei Schaltelemente, welche geräteintern dem ersten und zweiten Ausgang 17,16 vorgeschalte sind. Mittels der beiden Schaltelemente wird der geräteinterne Versorgungsstrang zwischen dem Eingang 14 und den ersten und zweiten Ausgängen 17,16 unterbrochen. Dieser Zustand wird durch Figur 1 gezeigt. Das Abschaltmittel 8 dient somit dem Unterbrechen der über den ersten und zweiten Ausgang 17,16 erfolgenden Energieversorgung.

Nach einem Abschalten der Energieversorgung über den ersten und zweiten Ausgang 16,17 detektiert das Master-Modul 5, dass der zweite Ausgang 17 spannungslos geschaltet wurde. Üblicherweise würde ein AS-i Master hierauf eine Diagnosemeldung, welche einen Fehler charakterisiert, an die übergeordnete Steuerung ausgeben. Das Master-Modul 5 kann jedoch die vorliegende Schaltstellung der Schaltelemente des Abschaltmittels 8 erfassen. Aufgrund der erfassten vorliegenden Schaltstellung der Schaltelemente des Abschaltmittels 8 erkennt das Master-Modul 5, dass es sich um ein Abschalten der Energieversorgung aufgrund eines PROFIenergy Kommandos handelt, da die beiden Schaltelemente geöffnet sind. Das Master-Modul 5 unterbindet somit die üblicherweise zu versendende Diagnosemeldung. Die hierfür erforderliche logische Auswertung erfolgt mittels einer Steuereinheit (z.B. ein Mikrocontroller) der Vorrichtung.

Alternativ oder zusätzlich hierzu kann dem Master-Modul 5 durch das PROFINET-Kopfmodul 3 aufgrund des über das Kommunikationsmittel 13 empfangen PROFIenergy Kommando signalisiert werden, dass ein Unterbrechen der Energieversorgung zwischen dem Eingang 14 und den beiden Ausgängen 16,17 aufgrund des PROFIenergy Kommandos erfolgt. Das empfangen PROFIenergy Kommando oder ein den Abschaltbefehl charakterisierender Wert wird, z.B. über den Rückwandbus 12 des Modulträgers, zum Master-Modul 5 gesandt. Das Master-Modul 5 erkennt hierauf, dass der durch das Power-Modul 4 herbeigeführte Zustand, bei welchem die Ausgänge 16,17 spannungslos sind, kein Fehlerzustand ist, sondern ein bewusst herbeigeführter Betriebszustand der Vorrichtung darstellt. Die üblicherweise zu versendende Diagnosemeldung wird nicht versandt.

Aufgrund eines an die Vorrichtung gesandten PROFIenergy Kommandos, welches ein Abschalten des Systems charakterisiert, wird durch die Vorrichtung die Energieversorgung des AS-i Systems abgeschaltet. Hierdurch wird der Energieverbrauch minimiert und Kosten können eingespart werden.

Wird seitens der PROFINET Steuerung 1 ein PROFIenergy Kommando an die Vorrichtung gesandt, welches ein wiedereinschalten des AS-i Systems charakterisiert, so wird durch die Vorrichtung das Abschaltmittel 8 derart angesteuert, dass am ersten und zweiten Ausgang 17,16 die betriebsmäßig zu erwartende Spannung für das nachgeschaltete AS-i System anliegt. Die beiden Schaltelemente des Abschaltmittels 8 werden hierfür geschlossen.

Die Vorrichtung umfasst ferner eine erste Auswerteeinheit 11, welche die vorliegenden Strom- und/oder Spannungswerte am ersten und zweiten Ausgang 16,17 erfasst. Im aktiven Betrieb des AS-i Systems detektiert die Vorrichtung mittels der ersten Auswerteeinheit 11 die vorliegenden Strom- und/oder Spannungswerte am ersten und zweiten Ausgang 17,16 und gibt über das Kommunikationsmittel 13 des PROFINET-Kopfmoduls 3 die erfassten Strom- und/oder Spannungswerte an die PROFINET Steuerung 1 mittels eines PROFINET Telegramms aus. Der PROFINET Steuerung 1 liegen somit die Verbrauchsdaten der Vorrichtung und somit des AS-i Systems vor, so dass ein verbessertes Energiemanagement erfolgen kann. Eine transparente Darstellung des Energieflusses innerhalb des PROFINET Systems und des AS-i System kann erfolgen, so dass eine Optimierung des energetischen Verhaltens der durch PROFINET und AS-i gebildeten Anlage erfolgen kann.

Durch die im Power-Modul 4 integrierte Abschalteinrichtung 8 kann ein externes Schütz vermieden werden, welches die Energieversorgung der AS-i Slaves 2 unterbricht. Hierdurch bedingt sind weniger Geräte bzw. Bauteile erforderlich, der Verdrahtungsaufwand wird reduziert und Kosten können eingespart werden.

Durch die Auswertung des PROFIenergy Kommandos im Powermodul 4 wird kein separates Digitalmodul zur Abschaltung benötigt. Dies spart Kosten und der Verdrahtungsaufwand entfällt.

Durch die Unterdrückung der Diagnosemeldung bei fehlender ASi Spannung durch Auswertung der vorliegenden Schaltstellung des Abschaltmittels 8 oder durch Auswertung des PROFIenergy Kommandos durch das Master-Modul 5 wird im Pausenbetrieb, welcher durch das PROFIenergy Kommando herbeigeführt wurde, keine Diagnosemeldung an die übergeordnete Steuerung ausgegeben. Eine Meldungsunterdrückung an Human Machine Interface Systemen kann entfallen.

FIG 2 zeigt eine schematische Darstellung der Vorrichtung aus FIG 1, welche als eine Geräteeinheit ausgebildet ist. Im Unterschied zur FIG 1 ist die Vorrichtung nicht modular aufgebaut, sondern wird durch lediglich eine Geräteeinheit ausgebildet. Einem Endanwender wird somit durch die Geräteeinheit sowohl ein AS-i Master, ein AS-i Power-Modul sowie ein Gateway zum übergeordneten PROFINET System bereitgestellt.

## Patentansprüche

1. Vorrichtung für ein AS-Interface System mit einem ersten Ausgang (17), an welchen ein erstes AS-Interface Kabel (7) anzuschließen ist, einem zweiten Ausgang (16), an welchen ein zweites AS-Interface Kabel (6) anzuschließen ist, einem Kommunikationsmittel (13) zum Empfangen von PROFINET Telegrammen und einem Eingang (14), an welchen eine externe Energieversorgungsquelle (18) anzuschließen ist, wobei die Vorrichtung am ersten Ausgang (17) und am zweiten Ausgang (16) jeweils eine Spannung zur Energieversorgung des AS-Interface Systems anlegen kann, wobei die Vorrichtung ein Abschaltmittel (8) zum Unterbrechen einer über den ersten und zweiten Ausgang (17,16) erfolgenden Energieversorgung umfasst und bei einem Empfang eines PROFIenergy Kommandos über das Kommunikationsmittel (13) mittels des Abschaltmittels (8) eine über den ersten und zweiten Ausgang (17,16) erfolgende Energieversorgung unterbricht.

2. Vorrichtung nach Anspruch 1, wobei die Vorrichtung einen AS-Interface Master umfasst, welcher über den zweiten Ausgang (16) mit nachgeschalteten AS-Interface Slaves (2) kommunizieren kann.

3. Vorrichtung nach einem der vorhergehenden Ansprüche, wobei die Vorrichtung ein Datenentkopplungsmodul (9) umfasst, welches geräteintern zwischen dem Abschaltmittel (8) und dem zweiten Ausgang (16) geschaltet ist.

4. Vorrichtung nach einem der vorhergehenden Ansprüche, wobei die Vorrichtung derart ausgebildet ist, dass dem AS-Interface Master ein über das Kommunikationsmittel (13) empfangenes PROFIenergy Kommando angezeigt wird.

5. Vorrichtung nach einem der vorhergehenden Ansprüche, wobei die Vorrichtung eine erste Auswerteeinheit (11) umfasst, welche die Strom- und/oder Spannungswerte am ersten und zweiten Ausgang (17,16) erfasst, wobei die Vorrichtung derart ausgestaltet ist, dass sie über das Kommunikationsmittel (13) die mittels der ersten Auswerteeinheit (11) erfassten Strom- und/oder Spannungswerte ausgibt.

6. Vorrichtung nach einem der vorhergehenden Ansprüche, wobei die Vorrichtung durch eine Geräteeinheit ausgebildet ist.

7. Vorrichtung nach einem der Ansprüche 1 bis 6, wobei die Vorrichtung modular aufgebaut ist und ein PROFINET-Kopfmodul (3), ein Power-Modul (4) und ein Master-Modul (5) umfasst, wobei das PROFINET-Kopfmodul (3) das Kommunikationsmittel (13) aufweist, das Power-Modul (4) den Eingang (14) und das Abschaltmittel (8) aufweist und das Master-Modul (5) den ersten und zweiten Ausgang (17,16) aufweist.

8. Verfahren zum Abschalten der Energieversorgung eines AS-Interface Systems mit einer Vorrichtung nach einem der Ansprüche 1 bis 7, wobei die Vorrichtung ein PROFIenergy Kommando über das Kommunikationsmittel (13) empfängt und daraufhin mittels des Abschaltmittels (8) eine über den ersten und zweiten Ausgang (17,16) erfolgende Energieversorgung unterbricht.
